# FASCICULE DE BREVET EUROPEEN

(11) **EP 1 732 778 B1**
(45) Date de publication et mention de la délivrance du brevet: **09.04.2008**
(21) Numéro de dépôt: 05717719.8
(22) Date de dépôt: 23.02.2005
(51) Int. Cl.: B60K 17/36, F16H 57/04

(54) **ENSEMBLE DE MECANIQUE ADAPTATION**
MECHANISCHE ADAPTERANORDNUNG
MECHANICAL ADAPTER ASSEMBLY

(30) Priorité: 24.02.2004 FR 0450341
(43) Date de publication de la demande: 20.12.2006
(73) Titulaire: RENAULT TRUCKS, 69800 St Priest (FR)
(72) Inventeur: IMBERT, Frédéri, F-69007 Lyon (FR)
(74) Mandataire: Vuillermoz, Bruno
(86) Numéro de dépôt international: PCT/FR2005/050121
(87) Numéro de publication internationale: WO 2005/084990

(56) Documents cités:
- EP-A- 0 599 050
- US-A- 3 550 724
- US-A- 3 719 253
- US-A- 4 352 301
- US-A- 5 584 773
- US-B1- 6 502 665

## Description

### Domaine Technique

L'invention se rapporte à un élément de transmission d'un véhicule motorisé, notamment d'un véhicule comportant plusieurs essieux motorisés tel qu'un camion ou un véhicule de chantier. La ligne de transmission de tels véhicules comporte ainsi un ensemble de mécanique adaptation permettant de guider en rotation plusieurs arbres de transmission, mais également de répartir entre ces essieux le couple moteur aux roues.

L'invention vise plus particulièrement un ensemble de mécanique adaptation dont le corps principal est obtenu par un procédé de moulage sans noyau, de façon à permettre un démoulage dit "au naturel".

Les caractéristiques du préambule de la revendication 1 sont connues de US 3550724 A.

### Art antérieur

De façon générale, les ensembles de mécanique adaptation équipant une ligne de transmission de véhicule motorisé, comportent un carter principal, également appelé support différentiel, qui est obtenu par un procédé de moulage au sable et nécessite l'utilisation de plusieurs noyaux pour parvenir aux formes complexes recherchées.

Or, l'utilisation de noyaux nécessite une opération de grenaillage pour éliminer les gains de sable qui restent collés aux parois des carters. Dans ce cas, il peut arriver que des grains de sable situés dans des zones inaccessibles restent collés aux parois et ce, jusqu'à l'assemblage de l'ensemble de mécanique adaptation. Ainsi, lors du fonctionnement de la ligne en transmission, l'huile qui circule à l'intérieur du carter peut décoller ces grains de sable qui forment alors des corps étrangers néfastes à la bonne tenue de la lubrification des éléments tournants dans le temps. Il est alors nécessaire de réaliser des opérations de maintenance telles que des vidanges régulières de l'ensemble de mécanique adaptation pour évacuer ces corps étrangers. De telles opérations de maintenance sont coûteuses, car elles immobilisent un véhicule pendant plusieurs heures.

Ainsi, le but de l'invention est de réduire, voire éliminer les corps étrangers provenant de la fabrication des pièces constituant un ensemble de mécanique adaptation, en vue de supprimer toute opération de maintenance.

### Exposé de l'invention

L'invention concerne donc un ensemble de mécanique adaptation équipant une ligne de transmission d'un véhicule motorisé, comportant :
- des arbres guidés en rotation par différents paliers, et des accouplements pour permettre l'entraînement des différents arbres.
- un support différentiel faisant office de carter, dans lequel circule de l'huile pour lubrifier les différents paliers et accouplements, le support différentiel comportant une ouverture avant;
- une plaque avant intégrant une pompe et permettant de refermer l'ouverture avant du support différentiel ;

Il se ***caractérise*** en ce qu'il comporte également :
- une tubulure rapportée permettant d'acheminer l'huile depuis la plaque avant jusqu'au support différentiel, la tubulure coopérant avec des agencements complémentaires au niveau de la plaque avant d'une part, et du support différentiel d'autre part.

Autrement dit, l'ensemble de mécanique adaptation comporte un carter ouvert sur au moins une de ses faces. Cette configuration permet d'éviter l'utilisation de noyau et donc facilite le nettoyage et assure propreté des pièces en vue de leur assemblage.

Cet ensemble de mécanique adaptation comporte ainsi une plaque avant permettant de fermer l'ouverture du support différentiel, mais également d'intégrer une pompe à huile entraînée en rotation par l'un des arbres tournant à l'intérieur de l'ensemble mécanique adaptation.

Il comporte en outre une tubulure rapportée qui permet également d'éviter l'utilisation de noyaux lors de la conception de l'ensemble de mécanique adaptation. Cette tubulure sert à acheminer l'huile à l'intérieur du support différentiel, de la partie basse jusqu'à une zone arrière du support différentiel, de façon à venir lubrifier les différents éléments tournant et accouplements.

Avantageusement, la plaque avant peut comporter un filtre à huile. En d'autres termes, lorsque la plaque avant est démontée du support différentiel, un filtre à huile reste solidaire de celle-ci et peut être changé si nécessaire.

En pratique, ce filtre à huile peut être démontable au niveau d'une face avant de la plaque avant, orientée vers l'extérieur d'un ensemble de mécanique adaptation. Autrement dit, dans ce cas, il n'est pas nécessaire de démonter la plaque avant pour changer le filtre à huile. Cette configuration est en outre la plus intéressante, car elle permet de réduire considérablement les coûts générés par les opérations de maintenance.

En pratique, la pompe peut être rapportée au niveau d'une face de la plaque avant orientée vers l'intérieur de l'ensemble de mécanique adaptation. Ainsi, il est nécessaire de démonter la plaque avant du support différentiel pour accéder à la pompe en vue de son changement ou plus simplement de sa maintenance.

Avantageusement, la pompe peut comporter un rotor et un stator intégrés au sein d'un logement. Dans ce cas, le logement formé dans la plaque avant joue le rôle du carter de la pompe qui est constitué lors du montage du rotor et du stator. Ce type de montage évite l'emploi d'une pompe pré-assemblée formant un composant indépendant rapporté dans l'ensemble de mécanique adaptation.

En pratique, la plaque avant peut comporter une zone d'aspiration dont le canal d'aspiration est orienté vers le bas et débouche à proximité du fond du support différentiel.

En d'autres termes, une canalisation permet d'aspirer l'huile tombant par gravité dans le fond du support différentiel. Cette canalisation débouche vers le bas et possède ainsi des orifices dont les axes de révolution sont sensiblement verticaux. De cette manière, l'aspiration se fait au plus près du fond du support différentiel de façon à ne pas aspirer de l'air lorsque, notamment la vitesse de rotation des différents éléments est élevée.

En effet, lorsque la vitesse de rotation des différents éléments à l'intérieur de l'ensemble de mécanique adaptation est élevée, ces éléments brassent alors constamment l'huile, et par conséquent, seulement une faible quantité d'huile reste constamment au fond de l'ensemble de mécanique adaptation.

L'ensemble de mécanique adaptation peut comporter un système de blocage du différentiel interpont. Dans ce cas, la plaque avant peut alors comporter un vérin apte à assurer le blocage du différentiel interpont et par suite la synchronisation des arbres reliés par le différentiel interpont.

Autrement dit, dans certains cas particuliers, il est nécessaire de propulser le véhicule au moyen de deux essieux motorisés synchronisés. Dans ce cas, l'un des arbres à l'intérieur de l'ensemble de mécanique adaptation est entraîné directement par le couple moteur du véhicule. Cette fonction est obtenue au moyen d'un vérin qui pilote les déplacements d'un crabot, ce qui accouple le planétaire du différentiel, avec l'un des arbres de sortie de l'ensemble de mécanique adaptation.

Avantageusement, et dans certains cas, la plaque avant peut comporter un échangeur thermique. En effet, pour améliorer le refroidissement de l'huile à l'intérieur de l'ensemble de mécanique adaptation, il est intéressant de munir la plaque avant d'un certain nombre d'ailettes jouant le rôle d'échangeur thermique.

Selon un autre mode de réalisation, la plaque avant peut comporter des orifices permettant d'évacuer l'huile et de réaliser son refroidissement au sein d'un échangeur thermique indépendant. Dans ce cas, un certain nombre de durites permet de connecter les orifices situés sur la plaque avant avec l'échangeur thermique indépendant. Cette configuration permet notamment de positionner l'échangeur thermique dans une zone plus ventilée ou moins soumise aux salissures.

En pratique, la plaque avant peut être obtenue par un procédé de moulage sans noyau. De cette manière, il est possible de nettoyer la pièce dans toutes les zones la constituant en étant sûr de ne pas laisser de grain de sable.

Dans ce cas, un couvercle peut être rapporté sur la plaque avant pour assurer la distribution de l'huile dans des zones nécessitant un apport d'huile pour la bonne lubrification. Ainsi, la plaque avant comporte un orifice permettant de fournir un accès de maintenance à l'ensemble de mécanique adaptation et est refermée par un couvercle.

Avantageusement, la tubulure caractéristique peut comporter au moins un orifice permettant de lubrifier précisément une zone déterminée de l'ensemble de mécanique adaptation.

Autrement dit, la tubulure peut être percée d'une pluralité de trous, qui peuvent être équipés ou non de gicleurs ou de durites permettant de lubrifier une zone prédéterminée à l'intérieur de l'ensemble de mécanique adaptation. Ainsi la tubulure peut faire office de conduit principal comportant plusieurs ramifications pour assurer une grande précision de lubrification des différents composants de l'ensemble de mécanique adaptation. Ces différents composants sont notamment les roues dentées de l'ensemble de mécanique adaptation, le différentiel interpont et les paliers tels que les roulements à billes guidant en rotation les différents axes.

### Description des figures

La manière de réaliser l'invention ainsi que les avantages qui en découlent, ressortiront bien de la description du mode de réalisation qui suit, donné à titre indicatif et non limitatif, à l'appui des figures annexées dans lesquelles :
- la figure 1 est une vue de dessous d'un véhicule motorisé comportant un ensemble de mécanique adaptation, conforme à l'invention ;
- la figure 2 est une coupe longitudinale d'un ensemble de mécanique adaptation, conforme à l'invention ;
- la figure 3 est une vue de gauche de l'ensemble de mécanique adaptation, conforme à l'invention ;
- la figure 4 est une vue en coupe d'un vérin de commande du différentiel interpont, conformément à l'invention,
- la figure 5 est une vue en coupe partielle longitudinale d'un ensemble de mécanique adaptation, conformément à l'invention ;
- la figure 6 est une vue en coupe partielle de la zone d'aspiration de la plaque avant, conformément à invention ;
- la figure 7 est une vue en coupe partielle longitudinale de l'ensemble de mécanique adaptation, conformément à l'invention.

### Manière de décrire l'invention

Comme déjà évoqué, l'invention concerne un ensemble de mécanique adaptation équipant une ligne de transmission d'un véhicule motorisé et comportant des arbres guidés en rotation par différents paliers, et des accouplements pour permettre l'entraînement des différents arbres.

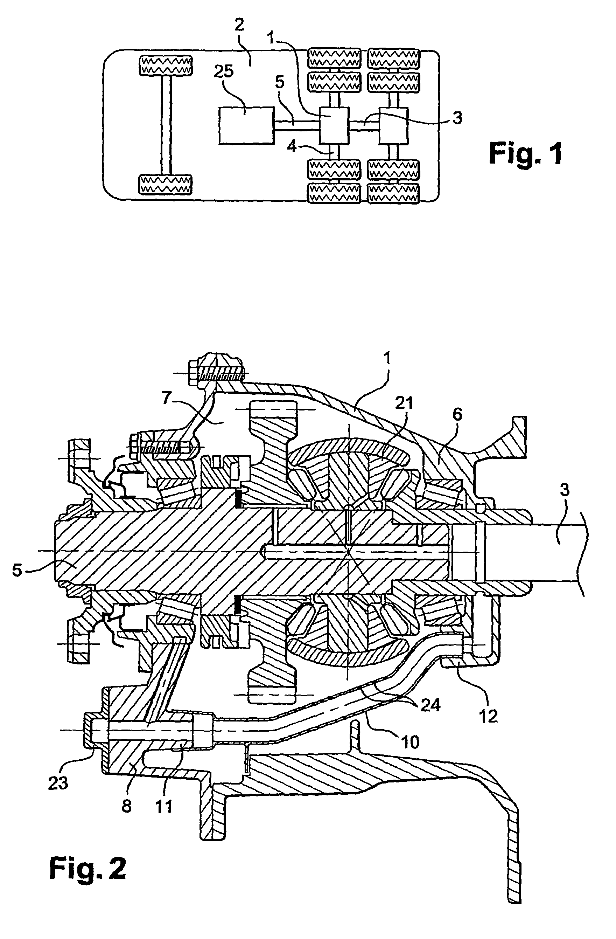

Tel que représenté en figure 1, un véhicule motorisé (2) comporte un ensemble moteur (25) qui entraîne un arbre (5). Cet arbre (5) pénètre dans l'ensemble de mécanique adaptation (1) et entraîne notamment en sortie l'arbre (3) relié à l'essieu arrière. Selon les conditions de chargement et/ou de la route, il peut être nécessaire d'entraîner de façon synchrone ou non les arbres (3) et (5), et par conséquent de transmettre le même couple moteur aux deux essieux.

Tel que représenté en figure 2, les arbres (3) et (5) sont reliés entre eux au moyen d'un différentiel interpont (21). Selon l'invention, l'ensemble de mécanique adaptation comporte un support différentiel (6) faisant office de carter et comportant une ouverture avant (7). Cette ouverture (7) est refermée au moyen d'une plaque avant (8) intégrant notamment une pompe à huile. L'ensemble de mécanique adaptation (1) comporte également une tubulure rapportée (10) qui permet d'acheminer l'huile depuis la plaque avant (8) jusqu'au support différentiel (6). La tubulure (10) coïncide à chacune de ses extrémités avec un agencement complémentaire (11,12).

Dans la forme illustrée, une pluralité d'orifices (24) sont ici réalisés sur la tubulure (10), de façon à lubrifier des zones particulières à l'intérieur de l'ensemble de mécanique adaptation (1).

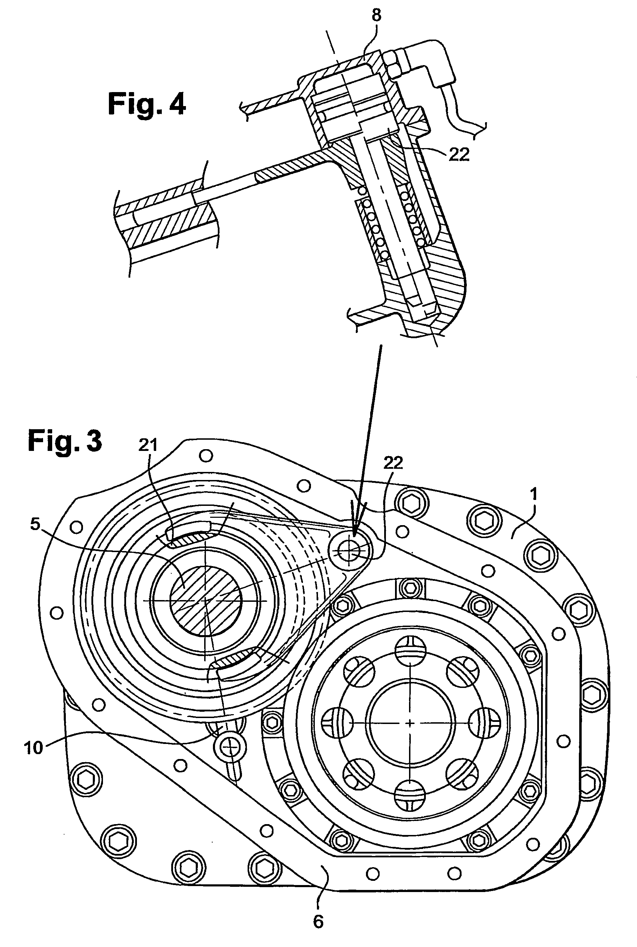

Tel que représenté en figure 3, l'ensemble de mécanique adaptation comporte un vérin (22) permettant de piloter le blocage du différentiel interpont (21). Il permet de déplacer un crabot pour permettre l'entraînement direct de l'arbre (3) par l'arbre moteur (5).

Avantageusement, et tel que représenté en figure 4, le vérin (22) peut être rapporté à l'intérieur de la plaque avant (8). Dans cette représentation, le vérin (22) est pneumatique mais il peut également être alimenté par une autre énergie et notamment par de l'énergie électrique ou hydraulique.

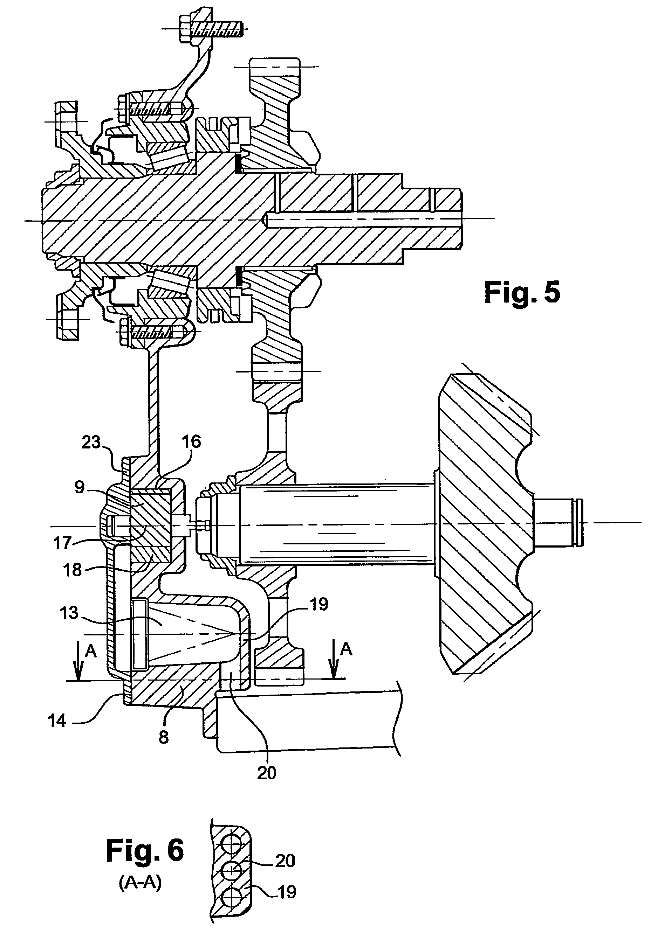

Tel que représenté en figure 5, la plaque avant (8) peut comporter un logement (16) dans lequel une pompe (9) est rapportée. L'axe de la pompe peut alors être entraîné en rotation par l'un des arbres tournants de l'ensemble de mécanique adaptation (1).

Dans ce cas, la pompe (9) utilisée est de type spécifique, puisqu'elle est dédiée à cette application et comporte un rotor (17) tournant à l'intérieur d'un stator (18).

Dans cette représentation, la pompe (9) est rapportée au niveau de la face extérieure (14) de la plaque avant (8). De cette manière, un couvercle (23) vient assurer la fermeture de la plaque avant (8) et l'étanchéité au niveau de cette face extérieure (14) et assurer la fonction de distribution de l'huile ou de tout élément lubrifiant.

Selon un mode de réalisation particulier, la plaque avant (8) peut également comporter un filtre à huile (13). Dans la représentation donnée à cette figure, ce filtre à huile (13) est également rapporté au niveau de la face externe (14) de la plaque avant (8). De cette manière, il peut être également changé facilement en ouvrant le couvercle (23).

La plaque avant (8) comporte de plus une zone d'aspiration (19) de l'huile et présente un certain nombre d'orifices (20) disposés au plus près du fond de l'ensemble de mécanique adaptation (1).

Tel que représenté à la figure 6, la zone d'aspiration (19) peut comporter par exemple trois orifices (20) de section circulaire mais elles peuvent également présenter une géométrie quelconque, qui peut être brute de fonderie et donc issue directement du moulage. De cette manière, les phénomènes de cavitation dus à l'aspiration d'air sont évités, même aux vitesses de rotation élevées.

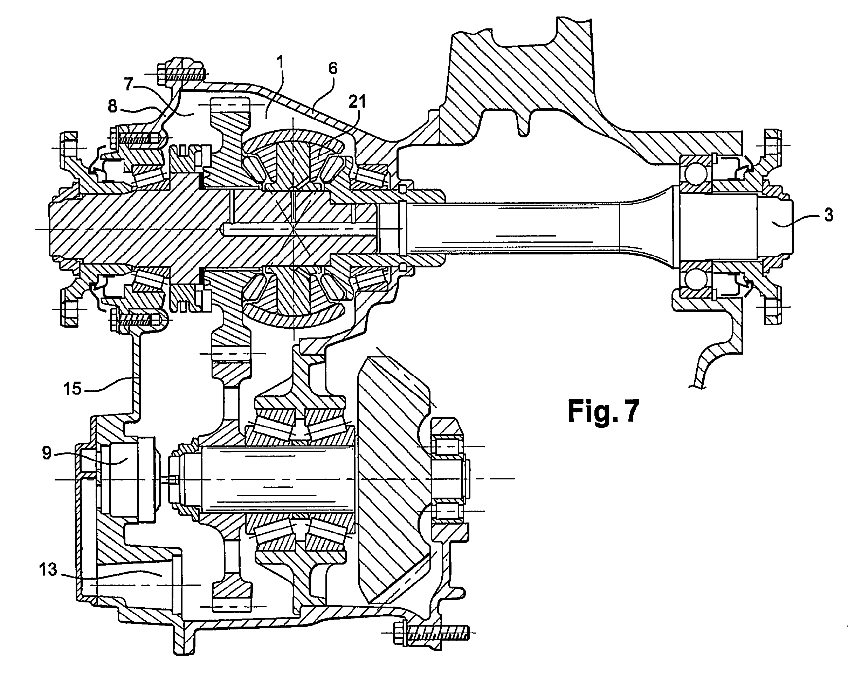

Tel que représenté en figure 7, il est également possible de rapporter la pompe (9) sur la face interne (15) de la plaque avant (8). Dans cet exemple de représentation, la pompe à huile (9) est un ensemble monobloc du commerce. De même, un filtre à huile (13) est rapporté au niveau de la face interne (15) de la plaque avant (8).

Ainsi pour ces deux éléments, il est nécessaire de démonter la plaque avant (8) pour permettre leur remplacement ou plus généralement leur maintenance.

Il ressort de ce qui précède qu'un ensemble de mécanique adaptation conforme à l'invention présente de multiples avantages, notamment :
- il garantit une totale propreté des pièces le constituant, puisque l'utilisation de noyaux est évitée pour le support différentiel et la plaque avant ;
- il permet de réduire voire d'éliminer les opérations de maintenance ;
- il permet de faciliter les opérations de montage, de maintenance et d'optimiser le processus de montage en production.

## Revendications

1. Ensemble de mécanique adaptation (1) équipant une ligne de transmission d'un véhicule motorisé (2) et comportant :
• des arbres (3, 4, 5) guidés en rotation par différents paliers ;
• des accouplements pour permettre l'entraînement des différents arbres (3, 4, 5) ;
• un support différentiel (6) faisant office de carter dans lequel circule de l'huile pour lubrifier les différents paliers et accouplements, ledit support différentiel (6) comportant une ouverture avant (7);
• une plaque avant (8) intégrant une pompe (9) et permettant de refermer ladite ouverture avant (7) du support différentiel (6) ;
**caractérisé en ce qu'**il comporte également :
• une tubulure rapportée (10) permettant d'acheminer l'huile depuis la plaque avant (7) jusqu'au support différentiel (6), ladite tubulure (10) coopérant avec des agencements complémentaires (11, 12) au niveau de la plaque avant (8) d'une part et du support différentiel (6) d'autre part.

2. Ensemble de mécanique adaptation selon la revendication 1, **caractérisé en ce que** la plaque avant (8) comporte un filtre à huile (13).

3. Ensemble de mécanique adaptation selon la revendication 2, **caractérisé en ce que** le filtre à huile (13) est démontable au niveau d'une face (14) de la plaque avant (8), orientée vers l'extérieur de l'ensemble mécanique adaptation (1).

4. Ensemble de mécanique adaptation selon la revendication 1, **caractérisé en ce que** la pompe (9) est rapportée au niveau d'une face (15) de la plaque avant (8) orientée vers l'intérieur de l'ensemble de mécanique adaptation (1).

5. Ensemble de mécanique adaptation selon la revendication 4, **caractérisé en ce que** la pompe (9) comporte un rotor (17) et un stator (18) intégrés au sein d'un logement (16).

6. Ensemble de mécanique adaptation selon la revendication 1, **caractérisé en ce que** la plaque avant (8) comporte une zone d'aspiration (19) dont le canal d'aspiration (20) est orienté vers le bas et débouche à proximité du fond du support différentiel (6).

7. Ensemble de mécanique adaptation selon la revendication 1, comportant un différentiel interpont (21) **caractérisé en ce que** la plaque avant (8) comporte un vérin (22) apte à assurer le blocage du différentiel interpont (21).

8. Ensemble de mécanique adaptation selon la revendication 1, **caractérisé en ce que** la plaque avant (8) comporte un échangeur thermique.

9. Ensemble de mécanique adaptation selon la revendication 1, **caractérisé en ce que** la plaque avant (8) comporte des orifices permettant d'évacuer l'huile et de réaliser son refroidissement au sein d'un échangeur thermique indépendant.

10. Ensemble de mécanique adaptation selon la revendication 1, **caractérisé en ce que** la plaque avant (8) est obtenue par un procédé de moulage sans noyau.

11. Ensemble de mécanique adaptation selon la revendication 10, **caractérisé en ce qu'**un couvercle (23) est rapporté sur la plaque avant (8) pour assurer la distribution de l'huile dans des zones nécessitant un apport d'huile pour la bonne lubrification.

12. Ensemble de mécanique adaptation selon la revendication 1, **caractérisé en ce que** la tubulure (10) comporte au moins un orifice (24) permettant de lubrifier précisément une zone déterminée de l'ensemble de mécanique adaptation (1).

## Claims

1. A mechanical adapter assembly (1) of a transmission line for a motor vehicle (2) comprising :
• shafts (3, 4, 5) rotatably guided by various bearings ;
• couplings for driving various shafts (3, 4, 5) ;
• a differential carrier (6) which is used as a crankcase containing the oil for lubricating the various bearings and couplings, said differential carrier (6) comprising a front aperture (7);
• a front plate (8) integrating a pump (9) and making it possible to close said front aperture (7) of the differential carrier (6);
**characterised in that** it also comprises :
• an attached pipe section (10) used to supply oil from the front plate (7) to the differential carrier (6), said pipe section (10) cooperating with matching fixtures (11, 12) firstly on the front plate (8) and secondly on the differential carrier (6).

2. A mechanical adapter assembly as claimed in claim 1, **characterised in that** front plate (8) comprises an oil filter (13).

3. A mechanical adapter assembly as claimed in claim 2, **characterised in that** the oil filter (13) is demountable from a surface (14) of front plate (8) facing towards the outside of the mechanical adapter assembly (1).

4. A mechanical adapter assembly as claimed in claim 1, **characterised in that** pump (9) is mounted on a surface (15) of front plate (8) facing towards the inside of mechanical adapter assembly (1).

5. A mechanical adapter assembly as claimed in claim 4, **characterised in that** pump (9) comprises a rotor (17) and a stator (18) fitted in a housing (16).

6. A mechanical adapter assembly as claimed in claim 1, **characterised in that** front plate (8) comprises an intake area (19) the suction passage (20) of which points downwards and emerges close to the bottom of differential carrier (6).

7. A mechanical adapter assembly as claimed in claim 1, comprising an inter-axle differential (21) **characterised in that** front plate (8) comprises a power cylinder (22) capable of ensuring locking of the inter-axle differential (21).

8. A mechanical adapter assembly as claimed in claim 1, **characterised in that** front plate (8) comprises a heat exchanger.

9. A mechanical adapter assembly as claimed in claim 1, **characterised in that** front plate (8) comprises openings making it possible to evacuate oil and cool it in an independent heat exchanger.

10. A mechanical adapter assembly as claimed in claim 1, **characterised in that** front plate (8) is obtained by using a coreless moulding process.

11. A mechanical adapter assembly as claimed in claim 10, **characterised in that** a cover (23) is fitted on front plate (8) to ensure distribution of oil to those areas that require extra oil for satisfactory lubrication.

12. A mechanical adapter assembly as claimed in claim 1, **characterised in that** attached pipe section (10) comprises at least one opening (24) making it possible to precisely lubricate a predetermined area of the mechanical adapter assembly (1).

## Patentansprüche

1. Mechanische Adapteranordnung (1) zur Bestückung eines Triebstrangs eines Motorfahrzeugs (2), umfassend:
- Wellen (3, 4, 5), die durch verschiedene Lager in ihrer Drehung geführt sind;
- Kupplungen zum Antreiben der verschiedenen Wellen (3, 4, 5) ;
- einen Differentialträger (6), der als Gehäuse dient, in dem Öl zum Schmieren der verschiedenen Lager und Kupplungen umläuft, und eine vordere Öffnung (7) umfasst;
- eine vordere Platte (8), in die eine Pumpe (9) integriert ist und die die Schließung der vorderen Öffnung (7) des Differentialträgers (6) gestattet;
**dadurch gekennzeichnet, dass** sie ferner umfasst:
- einen angebrachten Stutzen (10), der die Beförderung des Öls von der vorderen Platte (7) bis zu dem Differentialträger (6) gestattet und mit ergänzenden Anordnungen (11, 12) auf Höhe der vorderen Platte (8) einerseits und des Differentialträgers (6) andererseits zusammenwirkt.

2. Mechanische Adapteranordnung nach Anspruch 1, **dadurch gekennzeichnet, dass** die vordere Platte (8) ein Ölfilter (13) umfasst.

3. Mechanische Adapteranordnung nach Anspruch 2, **dadurch gekennzeichnet, dass** das Ölfilter (13) auf Höhe einer Seite (14) der vorderen Platte (8) abbaubar ist, die dem Äußeren der mechanischen Adapteranordnung (1) zugewandt ist.

4. Mechanische Adapteranordnung nach Anspruch 1, **dadurch gekennzeichnet, dass** die Pumpe (9) auf Höhe einer Seite (15) der vorderen Platte (8) angebracht ist, die dem Inneren der mechanischen Adapteranordnung (1) zugewandt ist.

5. Mechanische Adapteranordnung nach Anspruch 4, **dadurch gekennzeichnet, dass** die Pumpe (9) einen Läufer (17) und einen Ständer (18) umfasst, die in eine Aufnahme (16) integriert sind.

6. Mechanische Adapteranordnung nach Anspruch 1, **dadurch gekennzeichnet, dass** die vordere Platte (8) eine Saugzone (19) umfasst, deren Saugkanal (20) nach unten gerichtet ist und in Nähe des Bodens des Differentialträgers (6) ausmündet.

7. Mechanische Adapteranordnung nach Anspruch 1, umfassend ein Überbrückungsdifferential (21), **dadurch gekennzeichnet, dass** die vordere Platte (8) eine Kolbenzylindereinheit (22) umfasst, die die Blockierung des Überbrückungsdifferentials (21) gestattet.

8. Mechanische Adapteranordnung nach Anspruch 1,**dadurch gekennzeichnet, dass** die vordere Platte (8) einen Wärmetauscher umfasst.

9. Mechanische Adapteranordnung nach Anspruch 1, **dadurch gekennzeichnet, dass** die vordere Platte (8) Öffnungen umfasst, die die Abfuhr des Öls und seine Kühlung in einem unabhängigen Wärmetauscher gestatten.

10. Mechanische Adapteranordnung nach Anspruch 1, **dadurch gekennzeichnet, dass** die vordere Platte (8) durch ein Verfahren zum Formen ohne Kern erhalten ist.

11. Mechanische Adapteranordnung nach Anspruch 10, **dadurch gekennzeichnet, dass** ein Deckel (23) auf der vorderen Platte (8) angebracht ist, um die Verteilung des Öls in Zonen zu gewährleisten, die für die korrekte Schmierung eine Ölzufuhr erfordern.

12. Mechanische Adapteranordnung nach Anspruch 1, **dadurch gekennzeichnet, dass** der Stutzen (10) mindestens eine Öffnung (24) umfasst, die das genaue Schmieren einer bestimmten Zone der mechanischen Adapteranordnung (1) gestattet.
